# EUROPEAN PATENT APPLICATION

(11) **EP 3 851 703 A1**
(43) Date of publication of application: **21.07.2021**
(21) Application number: 21150484.0
(22) Date of filing: 07.01.2021
(51) Int. Cl.: F16F 9/504, F16F 9/49

(54) **SHOCK ABSORBER ASSEMBLY**

(30) Priority: 06.01.2020 CN 202010009251; 13.03.2020 US 202016819007
(71) Applicant: BeijingWest Industries Co. Ltd., 102400 Beijing (CN)
(72) Inventor: BIELAK, Roman, 31-462 Kraków (PL)
(74) Representative: Lukaszyk, Szymon

(57) **Abstract**

A shock absorber assembly (1) includes: a main tube (11) disposed on a center axis (A) and extending between a first end (111) and a second end (112) defining a fluid chamber (20, 30) extending therebetween for containing a working fluid; a first piston (12) slidably disposed in said fluid chamber dividing said fluid chamber into a compression chamber (20) between said first piston (12) and said first end (111) and a rebound chamber (30) being between said first piston (12) and said second end (112); a piston rod (13) disposed on said center axis (A) and attached to said first piston (12) for moving said first piston (12) between a compression stroke and a rebound stroke; a hydraulic compression stop (14) comprising a second piston (145) disposed in said compression chamber (20) and attached to said piston rod (13) for movement with said piston rod (13) during said compression stroke and said rebound stroke to provide additional damping force; and a tenon (15) disposed on said center axis (A) and between said first piston (12) and said second piston (145), said tenon (15) comprising a frequency dependent damping valve (151) attached to said first piston (12), a solid part (152) attached to said second piston (145) and a hollow part (153) therebetween.

## Description

### Technical field

The present disclosure generally relates to a shock absorber assembly.

### Background

There is an increased demand for improved comfort without deterioration of vehicle's handling performance. Hence there is an opportunity to apply frequency dependent damping that reduces the rebound forces as the stroke frequency increases. On the other hand a technique called hydraulic compression stop is improving comfort throughout trim of spike loads transferred from suspension into the vehicle's body.

The frequency dependent damping and the hydraulic compression stop are considered separately and applied in separate systems. The frequency dependent damping is not designed to take high pressures in a compression stroke, hence its application as a piston of the hydraulic compression stop will greatly limit tuning range of additional damping developed by the hydraulic compression stop system.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary of the disclosure

The present disclosure provides a shock absorber assembly that combines a hydraulic compression stop with a frequency dependent damping valve. The shock absorber assembly includes a hollow part for free flow of a working fluid between an accumulator chamber of the frequency dependent damping valve and a compression chamber, and further includes a solid part for protecting the frequency dependent damping valve from high pressures in the hydraulic compression stop, thereby avoiding limiting a tuning range of additional damping developed by the hydraulic compression stop and superimposing both performance benefits of the hydraulic compression stop and the frequency dependent damping.

It is one aspect of the present disclosure to provide a shock absorber assembly. The shock absorber assembly includes a main tube disposed on a center axis and extending between a first end and a second end defining a fluid chamber extending therebetween for containing a working fluid; a first piston slidably disposed in the fluid chamber dividing the fluid chamber into a compression chamber between the first piston and the first end and a rebound chamber being between the first piston and the second end; a piston rod disposed on the center axis and attached to the first piston for moving the first piston between a compression stroke and a rebound stroke; a hydraulic compression stop comprising a second piston disposed in the compression chamber and attached to the piston rod for movement with the piston rod during the compression stroke and the rebound stroke to provide additional damping force; and a tenon disposed on the center axis between the first piston and the second piston, the tenon comprising a frequency dependent damping valve attached to the first piston, a solid part attached to the second piston and a hollow part therebetween.

According to an embodiment of the present disclosure, the frequency dependent damping valve includes an accumulator chamber, and the hollow part allows for free flow of the working fluid between the accumulator chamber and the compression chamber.

According to an embodiment of the present disclosure, the hollow part includes a body part attached to the solid part and the frequency dependent damping valve, the body part extends from the solid part to the frequency dependent damping valve on the center axis.

According to an embodiment of the present disclosure, at least one hole is provided on the body part.

According to an embodiment of the present disclosure, the body part and an end part of the frequency dependent damping valve includes at least one slot.

According to an embodiment of the present disclosure, the hydraulic compression stop further includes an insert disposed on the center axis in the compression chamber for engaging the second piston during the compression stroke.

According to an embodiment of the present disclosure, a sealing ring of the second piston slidably engages a wall of the insert during the compression stroke.

According to an embodiment of the present disclosure, the frequency dependent damping valve includes a piston valve for controlling a first fluid channel and a frequency dependent valve for controlling a second fluid channel.

An advantage of the embodiments of the present disclosure exists in that limiting a tuning range of additional damping developed by the hydraulic compression stop is avoided and both performance benefits of the hydraulic compression stop and the frequency dependent damping are superimposed.

With reference to the following description and drawings, the particular embodiments of the present disclosure are disclosed in detail, and the principle of the present disclosure and the manners of use are indicated. It should be understood that the scope of the embodiments of the present disclosure are not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief description of the drawings

The drawings are included to provide further understanding of the present disclosure, which constitute a part of the specification and illustrate the preferred embodiment of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:
Fig. 1 is an axial cross-sectional view of a shock absorber assembly when the hydraulic compression stop not engaged according to one embodiment of the present disclosure;
Fig. 2 is an axial cross-sectional view of a shock absorber assembly when the hydraulic compression stop engaged according to one embodiment of the present disclosure.

### Detailed description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

Furthermore, in the following description of this disclosure, for the sake of convenience of explanation, a direction of radius taking a central axis A of a bore of a cylinder body as a center is referred to as "a radial direction", a direction of a circumference taking the central axis as a center is referred to as "a circumferential direction", a direction along a direction of the central axis is referred to as "an axial direction".

### A first aspect of embodiments

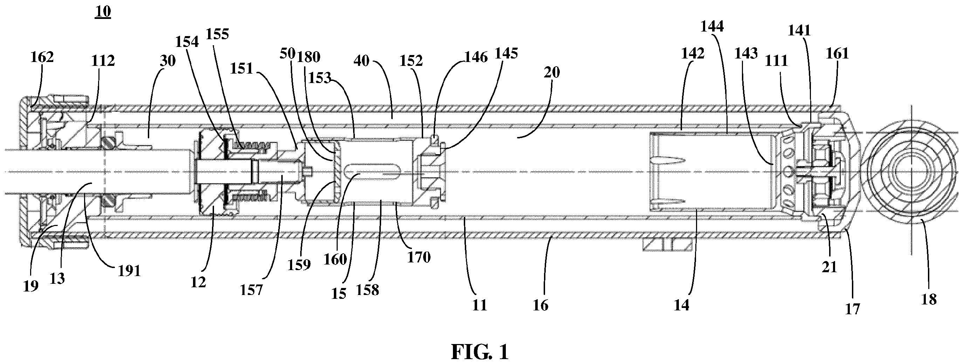

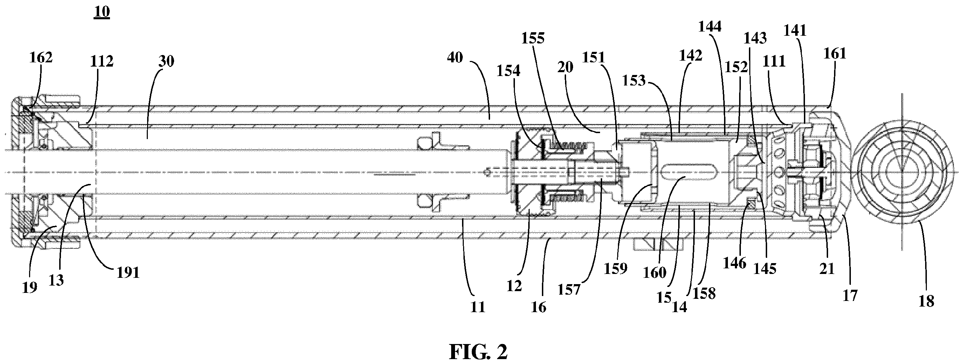

Embodiments of this disclosure provide a shock absorber assembly. The shock absorber assembly 1 constructed in accordance with one embodiment of the present disclosure is generally shown in Fig. 1. As shown in Fig. 1 and Fig. 2, a shock absorber assembly 10 includes a main tube 11, a first piston 12, a piston rod 13, a hydraulic compression stop 14 and a tenon 15.

The main tube 11 is disposed on a center axis A, having a generally cylindrical shape, and extends annularly about the center axis A between a first end 111 and a second end 112. The main tube 11 defines a fluid chamber 20, 30 extending between the first end 111 and the second end 112 for containing a working fluid.

An external tube 16 disposed on the center axis A radially spaced from the main tube 11, having a generally cylindrical shape, and extending annularly about the center axis A between a closed end 161 and an open end 162. The closed end 161 is disposed adjacent to the first end 111 of the main tube 11. The open end 162 is disposed adjacent to the second end 112 of the main tube 11 defining a compensation chamber 40 disposed about the center axis A between the main tube 11 and the external tube 16.

A cap 17 disposed at the closed end 161 of the external tube 16 to close the fluid chamber 20, 30 and the compensation chamber 40. It should be appreciated that the main tube 11 and the external tube 16 may have a shape other than cylindrical. In addition, it should be appreciated that a mounting ring 18 disposed on the cap 17 may be provided, having a generally circular shape, for attaching the shock absorber assembly to the vehicle.

The first piston 12, having a generally cylindrical shape, is slidably disposed in the fluid chamber 20, 30 and movable along the center axis A. The first piston 12 divides the fluid chamber 20, 30 into a compression chamber 20 and a rebound chamber 30. The compression chamber 20 extends between the first piston 12 and the first end 111 of the main tube 11. The rebound chamber 30 extends between the first piston 12 and the second end 112 of the main tube 11.

A piston rod guide 19 is disposed in the rebound chamber 30, adjacent to the second end 112 of the main tube 11 and the open end 162 of the external tube 16, and in sealing engagement with the main tube 11 and the external tube 16 to close the rebound chamber 30 and the compensation chamber 20. The piston rod guide 19 defines a bore 191, having a generally cylindrical shape, extending along the center axis A and in communication with the rebound chamber 30.

The piston rod 13, having a generally cylindrical shape, is disposed on the center axis A and extends along the center axis A, through the bore 191 of the piston rod guide 19, into the rebound chamber 30 and attached to the first piston 12 for moving the first piston 12 between a compression stroke and a rebound stroke.

The compression stroke is defined as the first piston 12 moving toward the first end 111 of the main tube 11 and the closed end 161 of the external tube 16. The rebound stroke is defined as the first piston 12 moving toward the second end 112 of the main tube 11 and the piston rod guide 19.

The hydraulic compression stop 14 is disposed in the compression chamber 20 and attached to the first end 111 of the main tube 11 for providing additional damping force during the compression stroke. The hydraulic compression stop 14 includes a fixed member 141, having a generally cylindrical shape, and attached to the first end 111 of the main tube 11.

The hydraulic compression stop 14 further includes an insert 142, having a generally cylindrical shape, disposed on the center axis A in the compression chamber 20. The insert 142 includes a bottom 143, having a circular shape, and a wall 144, having a tubular shape. The bottom 143 of the insert 142 is disposed in compression chamber 20 and attached to the fixed member 141. The wall 144 of the insert 142 is also disposed in the compression chamber 20, spaced radially from the main tube 11, and extending annularly outwardly from the bottom 143.

The hydraulic compression stop 14 further includes a second piston 145 disposed in the compression chamber 20 and attached the piston rod 13 for movement with the piston rod 13 during the compression stroke and the rebound stroke to provide additional damping force, and engaging the insert 142 during the compression stroke. As shown in Fig. 2, the second piston 145 includes a sealing ring 146 engaging the wall 144 of the insert 142 during the compression stroke.

A base valve 21 attached to the fixed member 141, and adjacent to the closed end 161 of the external tube 16 for regulating fluid flow between the compression chamber 20 and the compensation chamber 40.

The tenon 15 disposed on the center axis between the first piston 12 and the second piston 145. The tenon 15 includes a frequency dependent damping valve 151 attached to the first piston 12, a solid part 152 attached to the second piston 145 and a hollow part 153 between the frequency dependent damping valve 151 and the solid part 152.

The frequency dependent damping valve 151 includes an accumulator chamber 50 adjacent to the hollow part 153, and the hollow part 153 allows for free flow of the working fluid between the accumulator chamber 50 and the compression chamber 20.

When the frequency of the shaking of the shock absorber assembly is low, only a first fluid channel 155 is open during the rebound stroke, and the work fluid flows through a piston valve 154 and the first fluid channel 155 from the rebound chamber 30 to the compression chamber 20. When the frequency of the shaking of the shock absorber assembly is high, the frequency dependent valve 151 controls a second fluid channel 157, thereby both the first fluid channel 155 and the second fluid channel 157 are open during the rebound stroke.

The hollow part 153 includes a body part 158 attached to the solid part 152, the body part 158 is also attached to the frequency dependent damping valve 151, the body part 158 extends from the solid part 152 to the valve 151 on the center axis A.

At least one hole 160 is provided on the body part 158 for free flow of the working fluid between the accumulator chamber 50 and the compression chamber 20, thereby to de-pressure. A shape of the hole 160 is not limited in the present disclosure. For example, an elliptical hole or a circular hole is provided.

Furthermore, the body part 158 and an end part of the frequency valve 151 (surface 159) respectively includes at least one slot 170, 180 for passing the work fluid.

The solid part 152 is provided for protecting the frequency dependent damping valve 151 from high pressures, thereby the strength of the material of the solid part 152 should be high enough.

In operation, during the compression stroke, the first piston 12 and the second piston 145 move toward the first end 111 of the main tube 11. In response to the movement of the piston rod 13, the first piston 12, and the second piston 145, the working fluid flows from the compression chamber 20 to the rebound chamber 30 or the compensation chamber 40. In addition, during the compression stroke, the sealing ring 146 of the second piston 145 slidably engages the wall 144 of the insert 142 thereby providing additional damping force.

During the rebound stroke, the first piston 12 and the second piston 145 move toward the second end 112 of the main tube 11. In response to the movement of the piston rod 13, the first piston 12, and the second piston 145, the working fluid flows from the rebound chamber 30 or the compensation chamber 40 to the compression chamber 20. When the frequency of the shaking of the shock absorber assembly is high, the working fluid flows through both the first fluid channel 155 and the second fluid channel 157 of the frequency dependent damping valve 151. In addition, during the rebound stroke, the working fluid flows in and out the accumulator chamber 50 through the hollow part 153 to the compression chamber 20.

Thereby the frequency dependent damping valve 151 is protected from high pressures and both performance benefits of the hydraulic compression stop and the frequency dependent damping are superimposed.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A shock absorber assembly comprising:
a main tube disposed on a center axis and extending between a first end and a second end defining a fluid chamber extending therebetween for containing a working fluid;
a first piston slidably disposed in said fluid chamber dividing said fluid chamber into a compression chamber between said first piston and said first end and a rebound chamber being between said first piston and said second end;
a piston rod disposed on said center axis and attached to said first piston for moving said first piston between a compression stroke and a rebound stroke;
a hydraulic compression stop comprising a second piston disposed in said compression chamber and attached to said piston rod for movement with said piston rod during said compression stroke and said rebound stroke to provide additional damping force; and
a tenon disposed on said center axis and between said first piston and said second piston, said tenon comprising a frequency dependent damping valve attached to said first piston, a solid part attached to said second piston and a hollow part therebetween.

2. The shock absorber assembly according to claim 1 wherein said frequency dependent damping valve comprises an accumulator chamber, and said hollow part allows for free flow of said working fluid between said accumulator chamber and said compression chamber.

3. The shock absorber assembly according to claim 1 wherein said hollow part comprises a body part attached to said solid part and said frequency dependent damping valve, said body part extends from said solid part to said frequency dependent damping valve on said center axis.

4. The shock absorber assembly according to claim 3 wherein at least one hole is provided on the body part.

5. The shock absorber assembly according to claim 3 wherein said body part and an end part of said frequency dependent damping valve respectively comprises at least one slot.

6. The shock absorber assembly according to claim 1 wherein said hydraulic compression stop further comprises an insert disposed on said center axis in said compression chamber for engaging said second piston during said compression stroke.

7. The shock absorber assembly according to claim 6 wherein a sealing ring of said second piston slidably engages a wall of said insert during said compression stroke.

8. The shock absorber assembly according to claim 1 wherein said frequency dependent damping valve comprises a piston valve for controlling a first fluid channel and a frequency dependent valve for controlling a second fluid channel.
